# DEMANDE DE BREVET EUROPEEN

(11) **EP 4 203 186 A1**
(43) Date de publication de la demande: **28.06.2023**
(21) Numéro de dépôt: 22214443.8
(22) Date de dépôt: 19.12.2022
(51) Int. Cl.: H01Q 1/42, H01Q 15/00, H01Q 15/14, H01Q 15/24, H01Q 21/06

(54) **OBJET 3D COMPORTANT UN SANDWICH D'UNE OU PLUSIEURS COUCHES DE COMPOSITES, D'UNE OU PLUSIEURS COUCHES DE MOTIFS MÉTALLIQUES ET ÉVENTUELLEMENT D'UNE OU PLUSIEURS COUCHES DE POLYMÈRES POUR APPLICATIONS RADIOÉLECTRIQUES APPLIQUÉES AUX ANTENNES ET/OU AUX RADÔMES**

(30) Priorité: 23.12.2021 FR 2114331
(71) Demandeur: THALES, 92400 Courbevoie (FR)
(72) Inventeur: POMMIER, Stéphane, 92622 Gennevilliers Cedex (FR); BELLEC, Mathilde, 92622 Gennevilliers Cedex (FR); LE FEVRE, Alain, 92622 Gennevilliers Cedex (FR)
(74) Mandataire: Atout PI Laplace

(57) **Abrégé**

L'invention concerne un procédé de fabrication d'un matériau composite de forme 3D, comportant un empilement de couches de résine et de fibre, intégrant au moins une couche métallique, ledit procédé les étapes suivantes, un motif unitaire type ayant été déterminée pour ladite couche métallique :
i/ calcul des motifs organisés périodiquement sur la forme 3D non développable ; puis projection, sur un plan, desdits motifs, définissant ainsi une organisation plane de deuxièmes motifs ;
ii/ étape de polymérisation partielle, à plat, de premières couches, comportant une couche supérieure métallique, dudit empilement composite plat, de manière à le rendre gravable, mais à le garder toujours déformable ;
iii/ gravure électrochimique de ladite organisation de deuxièmes motifs définie à l'étape i sur la couche supérieure métallique de l'empilement composite plat issu de l'étape ii ;
iv/ étape de polymérisation de l'empilement composite gravé après disposition dudit empilement dans un moule présentant la forme 3D souhaitée.

## Description

### Domaine technique :

L'invention se situe dans le domaine de la fabrication d'objets 3D comportant d'un empilage de couches de matériau composites comportant au moins une couche de motifs métalliques.

### Technique antérieure :

Tout d'abord, certains termes et notions sont définis.

L'invention s'applique notamment à la réalisation de radômes, de réflecteurs, de réseaux d'antennes, des réseaux réflecteurs ou de surfaces polarisantes. Ces matériaux composites (empilage de matériaux composites et de motifs métalliques) sont destinés à des applications de filtrage des ondes hyperfréquences les traversant, ou de contrôle de la propagation des ondes électromagnétiques (EM) qui pourraient y être piégées ou guidées. Les applications concernent notamment les radiocommunications et les radars, ainsi que les applications liées à la compatibilité électromagnétiques, aux contremesures et à la furtivité.

En premier lieu, une ouverture rayonnante est protégée du milieu extérieur par un radôme. Ce dernier est généralement constitué d'une ou plusieurs couches de matériau diélectrique. Très souvent, on souhaite intégrer dans ce radôme des motifs métalliques dans le but notamment d'améliorer les performances de l'ouverture rayonnante qu'il protège et/ou de lui conférer de nouvelles fonctionnalités, et/ou encore de la protéger d'éventuels rayonnements indésirables. On appelle alors un tel radôme, un radôme fonctionnalisé. Les surfaces sélectives en fréquences (FSS), qui permettent de filtrer les ondes éclairant l'ouverture rayonnante selon un gabarit prédéterminé, en sont un cas particulier.

Les surfaces sélectives en fréquence (FSS) sont des structures filtrantes électromagnétiques pouvant être planaires (2D), développables ou non développables (3D), des méta-surfaces, des méta-réseaux, des surfaces holographiques, et des réseaux réflecteurs.

En second lieu, un réflecteur permet d'augmenter la surface rayonnante d'une antenne afin d'augmenter la directivité de celle-ci. Ce dernier est généralement constitué d'une unique fonction réfléchissante, mais à cause de certaines contraintes techniques de conception, ces réflecteurs ou sous réflecteurs doivent intégrer dans ces surfaces rayonnantes des motifs métalliques inclus dans du matériau composite dans le but notamment d'améliorer les performances de l'ouverture rayonnante et/ou de lui conférer de nouvelles fonctionnalités. On appelle alors un tel réflecteur ou sous-réflecteur, un réflecteur ou sous-réflecteur fonctionnalisé. A titre d'exemple, un sous-réflecteur avec inclusion d'une ou plusieurs couches de motifs métalliques peut être réflecteur à une fréquence F1 et transparent électriquement à une fréquence F2. Ou encore, un réflecteur peut être composé d'une couronne extérieure avec inclusion d'une ou plusieurs couches de motifs métalliques dans un matériau composite afin de réaliser une surface réfléchissante de diamètre D1 à F1 et de diamètre D2 à F2 avec D1>D2 et F1<F2.

Troisièmement, un réseau d'antennes est une mise en réseau d'antennes unitaires de manière périodique, pseudopériodique et/ou fractale. Cette mise en réseau permet d'augmenter la surface rayonnante de l'antenne et ainsi gagner en directivité et agilité (fréquentielle et /ou spatiale). Ce dernier est généralement constitué d'une ou plusieurs couches de matériaux diélectriques avec inclusion d'une ou plusieurs couches de motifs métalliques. Ici, les motifs métalliques sont les éléments rayonnant de l'antenne. Le réseau d'antenne peut ainsi être conformé à la forme du porteur afin d'améliorer l'intégration de celle-ci aux contraintes environnementales, notamment dans l'aéronautique.

Enfin, une surface polarisante permet de modifier ou améliorer la polarisation intrinsèque d'une antenne. Cette dernière est généralement constituée d'une ou plusieurs couches de matériau diélectrique avec inclusion d'une ou plusieurs couches de motifs métalliques. A titre d'exemple, une surface polarisante permet de convertir la polarisation d'une antenne à polarisation linéaire à une polarisation circulaire. Sinon, une surface polarisante permet de convertir la polarisation d'une antenne à polarisation elliptique à une polarisation circulaire.

Il est à noter qu'un autre type de fonctionnement ou d'application peut requérir l'inclusion de motifs métalliques dans un substrat diélectrique, l'ensemble étant solidaire d'un plan conducteur du type plan de masse. C'est le cas par exemple des méta surfaces, des surfaces à haute impédance, ou encore des réseaux réflecteurs.

En toute rigueur, les inclusions métalliques d'un radôme ou réflecteur (ou sous-réflecteur) fonctionnalisé ou surface polarisante peuvent être de forme quelconque, 2D ou 3D, et les motifs qu'elles dessinent peuvent être indifféremment connectés ou déconnectés.

Mais il est courant que ces radômes ou réflecteurs (ou sous-réflecteurs) fonctionnalisés ou surfaces polarisantes soient de forme non-développable (doublecourbure) générant des contraintes de conception et réalisation supplémentaires.

Par définition, une surface à simple courbure est une surface réglée développable, c'est-à-dire qui peut être étendue sur un plan, telle que le cône et le cylindre. Deux positions adjacentes de la génératrice se trouvent sur le même plan. Une surface gauche est une surface réglée non développable. Deux positions adjacentes de la génératrice ne se trouvent pas sur le même plan. Plusieurs surfaces externes des plateformes aéroportées et terrestres sont des surfaces gauches. Une surface à double courbure ne peut être engendrée que par une courbe et ne comporte aucun élément rectiligne, elle est donc une surface non réglée. Une telle surface, lorsqu'elle est engendrée par la rotation d'une courbe autour d'un axe situé sur le plan de la courbe, est appelée surface de révolution à double courbure. Les sphères, les tores, les ellipsoïdes de révolution et les hyperboloïdes de révolution sont des exemples courants de ce type de surfaces. Plusieurs surfaces rayonnantes d'antennes à réflecteur sont des surfaces de révolution à double courbure.

Une surface non développable ne peut être mise à plat. On peut néanmoins les développer approximativement en les divisant en sections et en substituant chaque section par une surface développable, soit un plan ou une surface à simple courbure.

Les processus de fabrication connus des empilages composites avec inclusion d'au moins une couche de motif métallique présentent un certain nombre d'inconvénients : ils ne permettent de fabriquer que des pièces planes, qui ne permettent pas d'obtenir la réponse radioélectrique à toutes les fréquences souhaitées à cause de la faible résolution des technologies additives seules ou soustractives par voie non chimiques (seuls des motifs assez larges sont réalisables, avec une répétabilité ou une déformation de motifs non satisfaisante). Ils ne sont pas applicables si plus de deux couches de motifs métalliques doivent faire partie du composite. Ces voies d'obtention des matériaux dégagent de la chaleur et nécessitent des matériaux durs. Ce qui signifie que les composites sont soit totalement polymérisés avant traitement, soit ils finissent de polymériser durant le traitement. Il est donc possible d'avoir une plaque de composite de forme non développable avec 2 faces présentant des motifs, mais totalement polymérisée. Il n'est donc plus possible de mettre en forme plusieurs empilements car les formes sont figées et la polymérisation totale. Il est impossible de reprendre le processus de polymérisation/collage

Les FSS sont classiquement formées par un réseau périodique de motifs métalliques gravés chimiquement sur un substrat mince de type Kapton, Polycarbonate, LCP (polymère à cristaux liquides). Ce substrat est ensuite lui-même associé à d'autres strates de matériaux diélectriques, l'ensemble étant polymérisé pour former un radôme fonctionnalisé final, ou pour former la FSS finale.

Un inconvénient de ce procédé est d'utiliser des matériaux différents pour les strates diélectriques seules et pour les strates contenant les motifs métalliques gravés. Sous certaines contraintes mécaniques, notamment celles rencontrées sur les plateformes aéroportées, cette différence de matériaux peut entraîner une délamination du composite, dégradant ses propriétés structurelles et pouvant même aller jusqu'à l'arrachement des strates entre elles. Sous certaines contraintes radioélectriques, notamment dans la bande Ka, un changement de matériaux peut dégrader les performances de la réponse radioélectrique de la FSS. Un problème à résoudre est donc notamment d'inclure des motifs métalliques (cuivre ou cuivre/nickel ou chrome par exemple) dans un objet composite sans ajouter un autre matériau que celui du radome lui-même, celui étant en matériau composite, par exemple en quartz/époxy.

Par ailleurs, les surfaces sélectives en fréquences FSS connaissent un intérêt grandissant dans les domaines de la radiocommunication car elles permettent d'optimiser les performances des antennes. Les FSS commencent à être intégrées dans les radômes composites qui protègent les systèmes antennaires. La solution connue la plus commune est d'intégrer un support métallisé et gravé dans les plis du matériau composite. Dans ce contexte, l'art antérieur propose diverses solutions. Le document US 6 208 316 B1 divulgue un procédé où les motifs métalliques sont fabriqués par gravure chimique sur un support PTFE appelé Duroid.

D'autres méthodes comme l'impression à jet d'encre sont utilisées pour effectuer un dépôt métallisé sur un support diélectrique, comme le décrit notamment l'article de E.A. Parker et S.M.A. Hamdy : « Rings as elements for Frequency Selective Surface », Electron. Lett., vol. 17, 1981, pages 612-614 ou encore la demande de brevet US 2017/0352948 A1. Les matériaux déposés sont des matériaux à base de carbone ou d'argent, moins conducteurs que le cuivre pur. De plus, ces techniques de dépôts ne permettent pas une résolution de réalisation des motifs suffisamment précise pour obtenir une réponse radioélectrique performante notamment en bande Ka.

Dans les solutions de l'art antérieur les motifs métalliques sont gravés sur un support différent du matériau du radôme, dans tous les cas elles ne permettent donc pas d'incorporer des motifs métalliques conducteurs, en cuivre notamment, dans un matériau composite dans ajout d'un support extérieur.

Il est souhaité de pouvoir fabriquer des formes 3D notamment non développables comprenant un empilage de composites et de motifs métalliques, pour obtenir par exemple des réflecteurs ou des radômes possédant une ou plusieurs couches sélectives en fréquences.

Un but de l'invention est notamment de pallier les inconvénients de l'art antérieur mentionnés ci-dessus.

### Résumé de l'invention :

A cet effet, suivant un premier aspect, la présente invention décrit un procédé de fabrication d'un matériau composite de forme 3D, comportant un empilement de couches de matériau, intégrant au moins une couche de motifs métalliques, ledit procédé comprenant les étapes suivantes, une organisation périodique ou pseudopériodique en 2D de premiers motifs similaires à un motif unitaire type ayant été déterminée pour ladite couche de motifs métalliques en fonction de la fonction radioélectrique souhaitée pour la couche de motifs métalliques :
i/ calcul des premiers motifs de ladite organisation périodique une fois apposée sur la forme 3D ; puis projection, sur un plan, desdits motifs calculés sur la forme 3D, définissant ainsi une organisation plane de deuxièmes motifs ;
ii/ étape de polymérisation partielle, à plat, d'au moins un sous-ensemble de premières couches dudit empilement, de manière à le rendre gravable, mais à le garder toujours déformable, lesdites premières couches étant à plat et comportant au moins une couche métallique en surface dudit sous-ensemble ;
iii/ gravure électrochimique de ladite organisation de deuxièmes motifs définie à l'étape i sur chaque couche métallique de l'empilement composite plat issu de l'étape ii ;
iv/ étape de polymérisation finale de l'empilement composite gravé après disposition dudit empilement dans un moule présentant la forme 3D souhaitée.

L'invention a pour objet un procédé de fabrication d'un matériau composite de forme développable ou non développable composé d'un empilement de couches de résine et de fibre, intégrant des motifs métalliques, lesdits motifs étant obtenus par gravure d'au moins un feuillard métallique déposé sur une au moins une couche de fibre pré-imprégnée de résine avant polymérisation et empilement avec lesdites couches, ladite fibre pré-imprégnée de résine étant par exemple la même que la fibre préimprégnée de résine des autres couches dudit matériau composite. En effet, si le matériau utilisé est suffisamment ductile, les feuilles plates peuvent être étirées, pressées, estampées, repoussées ou travaillées autrement pour prendre la forme voulue. Les surfaces non développables sont souvent produites par une combinaison de surfaces développables qui sont ensuite façonnées légèrement à la forme requise.

L'innovation permet ainsi la fabrication de pièces de formes non développables composées de matériaux composites avec des inserts d'une ou plusieurs couches de motifs métalliques gravés de formes particulières.

L'invention permet :
- d'obtenir des motifs métalliques sur une surface non développable à partir d'une ou plusieurs surfaces planes à partir d'un matériau suffisamment ductile (passage du 2D au 3D non développable) en réalisant un développé approximatif mais suffisamment précis de N sections. Ces N sections sont substituées par des surfaces développable, soit un plan ou une surface à simple courbure.
- de réaliser des fichiers de fabrication 2D des motifs métalliques périodiques ou pseudopériodique avec une résolution très fine et une forte fiabilité (peu de défauts) ;
- de former l'amalgame composite avec la ou les couches de motifs métalliques périodiques ou pseudo-périodiques.

Dans des modes de réalisation, un tel procédé comprendra en outre l'une au moins des caractéristiques suivantes :
- la forme est une forme non développable ;
- à l'issue de l'étape i :
   - la valeur d'au moins un paramètre indiquant les déformations entre les motifs projetés sur ladite forme 3D et le motif unitaire cible est calculée ; et
   - ladite valeur calculée est comparée à un seuil ; et
   - si ladite valeur est supérieure au seuil, une modification est apportée à ladite organisation périodique ou pseudo-périodique en 2D de premiers motifs et/ou à un ou plusieurs premiers motifs ; et
      avant la mise en œuvre de l'étape ii, l'étape i est itérée sur la base de ladite organisation périodique ou pseudo-périodique en 2D de premiers motifs obtenue après modification, les étapes ii à iv étant alors mises en œuvre sur la base de l'organisation plane de deuxièmes motifs obtenue après modification ;
- un ou plusieurs paramètres sont calculés parmi un paramètre indiquant une déformation en longueur des motifs et un paramètre indiquant une déformation en angle des motifs ;
- une cartographie de la déformation est calculée, représentant en fonction de la position, sur ladite forme 3D, du motif projeté, un niveau de déformation ;
- le sous-ensemble de premières couches considéré à l'étape i comporte une couche métallique sur la face inférieure dudit sous-ensemble et une couche métallique sur la face supérieure dudit sous-ensemble et une gravure de motifs est effectuée sur chacune des deux couches métalliques à l'étape iii ;
- l'empilement devant comprendre plusieurs sous-ensembles comportant chacun un empilement de couche(s) de résine et fibre et de couche(s) métallique(s) périodique(s) ou pseudo-périodique(s) :
   l'ensemble des étapes i, ii, iii est mise en œuvre pour chaque sous-ensemble, chaque sous-ensemble étant associé à sa propre organisation de motifs périodiques ou pseudo-périodiques ; et
   l'étape iv de polymérisation finale dans le moule est alors mise en œuvre une fois que les sous-ensembles issus chacun des étapes i, ii et iii ont été empilés ou apposés ensemble dans le moule ;
- lesdits motifs métalliques ont pour fonction au moins une fonction parmi celle de filtrer des ondes électromagnétiques, d'être un ensemble ou sous ensemble de l'élément rayonnant d'une antenne, de modifier le comportement de l'onde électromagnétique incidente ;
- lesdits motifs métalliques ont pour fonction de recevoir ou d'émettre des ondes radioélectriques.

A cet effet, suivant un autre aspect, la présente invention décrit un procédé de fabrication d'un élément, comportant un procédé de fabrication d'un empilage composite selon l'une des revendications précédentes, selon lequel l'élément est un élément parmi une antenne, un radôme et une surface polarisante.

### Brève description des figures :

L'invention sera mieux comprise et d'autres caractéristiques, détails et avantages apparaîtront mieux à la lecture de la description qui suit, donnée à titre non limitatif, et grâce aux figures annexées, données à titre d'exemple.
[Fig. 1] La figure 1 représente les étapes d'un procédé dans un mode de réalisation de l'invention ;
[Fig. 2] La figure 2 représente un motif unitaire type dans un mode de réalisation de l'invention ;
[Fig. 3] La figure 3 représente une vue de dessus d'une surface non développable parabolique et d'une portion de coupe de ladite surface dans un mode de réalisation de l'invention ;
[Fig. 4] La figure 4 représente le résultat de l'étape 102 dans un mode de réalisation de l'invention ;
[Fig. 5] La figure 5 représente le maillage 3D d'une surface parabolique dans un mode de réalisation de l'invention ;
[Fig. 6] La figure 6 représente l'organisation périodique, ici sous forme de matrice 2D, de motifs unitaires types à projeter sur le maillage 3D de la surface dans un mode de réalisation de l'invention.
[Fig. 7] La figure 7 représente une cartographie des distorsions dans un mode de réalisation de l'invention.

### Description détaillée :

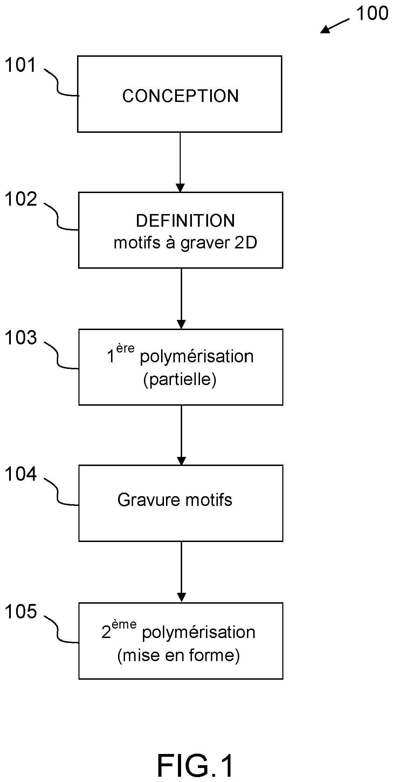

La figure 1 représente les étapes d'un procédé 100 de fabrication de surfaces non développables en matériau composite comportant une ou des couches de motifs métalliques périodiques ou pseudo-périodiques.

De façon connue, un matériau composite est un matériau composé de plusieurs matériaux de nature ou d'origine différentes (associés ainsi à des caractéristiques mécaniques sont supérieures à celles des matériaux entrant dans sa composition).

Dans une étape de conception 101 :
- Il est choisi la forme 3D développable ou non développable (qui est donc non plane) de la surface, S, à fabriquer, les bandes de fréquences de travail, la propriété électromagnétique souhaitée (en termes de rayonnement, polarisation, filtrage ...) (par exemple, on souhaite fabriquer une antenne parabolique dont son réflecteur est soit réfléchissant pour une bande de fréquence et transparent pour les autres bandes de fréquences, dans une polarisation donnée) ;
- en fonction de ces éléments, le type du motif métallique unitaire associé au nombre n de couches de motifs dans un composite particulier est choisi afin de respecter les performances radioélectrique dudit motif unitaire (filtre, élément rayonnant, polariseur...).

De manière générale, les structures périodique ou pseudo-périodique peuvent être catégorisées en deux groupes : les éléments de type patch et les éléments de type fentes.

Par exemple, dans le cas particulier des FSS, une structure simple sélective en fréquences peut donc être considérée comme un réseau périodique de patchs (filtre de type passe-bas) ou un réseau périodique de fentes (filtre de type passe-haut) : Saleh Omar Mohamed, « Performance enhancement of salisbury screen microwave absorber using dual-layer frequency selective surfaces (fss) », 2013 ; il existe divers motifs résonnants en fonction des besoins (polarisation, taille électrique, agilité ...) : des exemples de motifs sont présentés R. J. Williams, "Frequency selective terahertz retroreflectors", 2014.R. J. Williams, "Frequency selective terahertz retroreflectors", 2014.

Le but est d'avoir à l'issue du procédé 100, sur la surface S non développable 3D une fois fabriquée, un ensemble de motifs métalliques gravés, répétés sur la surface 3D de façon périodique ou pseudo-périodique et présentant chacun des dimensions et angles idéalement identiques à ceux du motif unitaire type. A cette fin, les étapes suivantes sont mises en œuvre.

Dans une étape 102, la définition d'une surface plane composée d'une disposition de motifs (appelée ensuite deuxièmes motifs) à graver (par exemple une surface parabolique pour une antenne de 2 m) est obtenue, par la mise en œuvre des sous-étapes 102_1 à 102_5, à l'aide d'un module logiciel de projection 2D.

Ce module logiciel de projection 2D permet d'abord de définir la répartition et la forme (celle du motif unitaire type) des motifs voulus en 3D sur la forme finale, et de projeter cette modélisation pour donner les motifs à graver en 2D (les deuxièmes motifs). Ces deuxièmes motifs à graver en 2D ou au moins un certain nombre de ceux-ci sont distincts du motif unitaire type.

En effet, si on se contentait de graver sur une surface 2D une répétition du motif unitaire organisée selon la (pseudo-)périodicité souhaitée, les motifs résultants sur la forme 3D non développable seraient déformés par rapport au motif unitaire type, à la sortie de l'étape 105, et ne donneraient pas lieu aux propriétés électromagnétiques souhaitées.

Le logiciel de projection 2D prédit, en fonction d'une répartition souhaitée des motifs unitaires sur la surface S, la forme et la disposition que doivent respecter des motifs gravés à plat (les deuxièmes motifs) pour qu'après que la surface initialement plane présentant ces motifs a été conformée dans un moule, on obtienne cette répartition souhaitée des motifs unitaires (les premiers motifs) sur la surface S avec la distorsion en angle et longueur la plus faible possible.

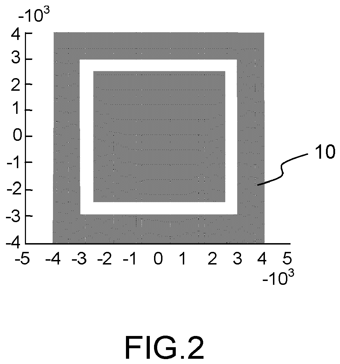

Dans l'exemple considéré, dans une sous-étape 102_1, le module logiciel de projection 2D est adapté pour recevoir en entrée :
- les données de définition du motif unitaire type (dimensions en x,y, géométrie) ; par exemple, le motif type 10 est représenté en figure 2 selon les axes orthogonaux x, y gradués en mètres ; on notera que dans ce mode particulier de réalisation, les sections foncées sont destinées à être réalisées en métal, tandis que la section claire correspond à une absence de métal (l'inverse est aussi possible dans un autre mode de réalisation) ;
- les données de définition de la surface non développable S, dans notre cas une surface parabolique ; et
- les données de définition d'un maillage, par un grid orthogonal, de cette surface S : le pas du maillage est défini en fonction de la surface et du motif unitaire type : plus le maillage est fin, plus la cartographie de la surface est précise, mais plus le temps de calcul et de projection est long. Donc plus la taille de la cellule unitaire est petite, plus le maillage doit être fin. Par exemple, on choisit sans que ce soit une règle strictement définie (dépend de la complexité du motif) :
   soit d la dimension maximale de le surface, soit m le maillage
   il faut que le ratio d/m soit inférieur ou égal au quart de la dimension minimale du motif unitaire.

Tout d'abord, dans une sous-étape 102_2, le module logiciel de projection 2D découpe, le cas échéant, la surface développable S en N portions, si les dimensions de S le nécessitent du fait des limites de taille imposées par la gravure et également de l'approximation de la surface non développable en développable grâce à la ductilité du matériau. Pour chaque portion, un sous-ensemble plan comportant une disposition de deuxièmes motifs à graver va être obtenu par la mise en œuvre des sous-étapes suivantes.

Ensuite sur chaque portion, dans une sous-étape 102_3, le module logiciel de projection effectue une projection en 3D, sur la (portion de) surface, d'une répartition plane de premiers motifs égaux chacun au motif unitaire type et disposés de façon périodique ou pseudo-périodique (par exemple organisés de façon matricielle). Cette projection est calculée à partir des données d'entrée du module.

Par exemple, sur la portion considérée de surface S, en réalisant un maillage 3D de S par des indices {i,j} représentant un point caractéristique d'un premier motif, par exemple son barycentre puis en projetant le premier motif (égal au motif unitaire type) autour de chaque couple d'indices {i,j} sur ce maillage 3D par la mise en œuvre de l'algorithme LSCM (« Least Square Conformai Mapping »).

Dans une sous-étape 102_4, le module logiciel de projection calcule en outre les déformations des motifs projetés obtenus par rapport au motif unitaire type.

Par exemple, le résultat du calcul de déformation comprend une cartographie qui présente, en fonction de la position en 2D du motif sur la (portion) surface S, le pourcentage de déformation en longueur et une autre cartographie qui présente le pourcentage de déformation en angle (par rapport au 90° entre chaque côté du motif unitaire type ici carré).

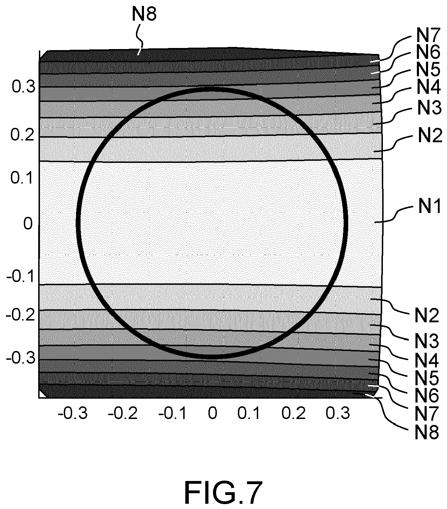

Sur la figure 7 est représentée, à titre d'exemple, une cartographie des distorsions de longueur du motif calculées selon l'ordonnée de la figure 2 (une autre cartographie peut être calculée relative à la longueur du motif mais cette fois dans une dimension orthogonale à la précédente, i.e. selon l'abscisse de la figure 2 ou encore une cartographie relative aux déformations des angles formés par les côtés du motif). Les % d'erreur sont séparés en niveaux ; un niveau est séparé du précédent par 0,1 % d'erreur. Le niveau le plus faible d'erreur correspondant à la plage [0% - 0,1 %] se trouve au centre de la projection 3D de la matrice de motifs (à l'ordonnée 0 de la figure 7) et les niveaux augmentent au fur et à mesure que les motifs se rapprochent des bords de la projection 3D, qui correspondent au niveau d'erreur [0,7 % - 0,8 %]. Le cercle représente une projection de la surface non développable, ici une parabole.

Le logiciel de projection indique alors les pourcentages de déformation en longueur et en angle de chaque motif métallique sur la surface non développable. Le concepteur juge si ces seuils sont inférieurs aux limites fixées notamment en fonction de la réponse en fréquence du motif métallique unitaire sélectionné et de sa sensibilité aux tolérances dimensionnelle de fabrications. Si ces conditions ne sont pas respectées, alors certains paramètres sont modifiés afin d'anticiper la distorsion des motifs sur la surface non développable et on itère le processus décrit ci-dessus depuis les sous-étapes 102_2 jusqu'à 102_4. La modification de paramètres comprend au moins un élément parmi : la modification d'un ou plusieurs premiers motifs, la modification de la répartition périodique des premiers motifs, la modification du pas de maillage de la surface non développable.

Dans d'autres modes de réalisation, seul un des seuils est considéré ou alors un seuil global combinant les deux seuils.

Puis, dans une sous-étape 102_5, le module logiciel réalise une projection de tous les motifs métalliques de la forme 3D non-développable sur une surface 2D. Cette projection est réalisée avec l'algorithme LSCM dans un mode de réalisation. Dans un mode de réalisation, les deux dimensions choisies sont celles correspondant aux deux plus grandes dimensions de la forme 3D. cette projection sur un plan depuis la surface S donne lieu à une disposition dans ce plan de deuxièmes motifs et définit leur forme respective.

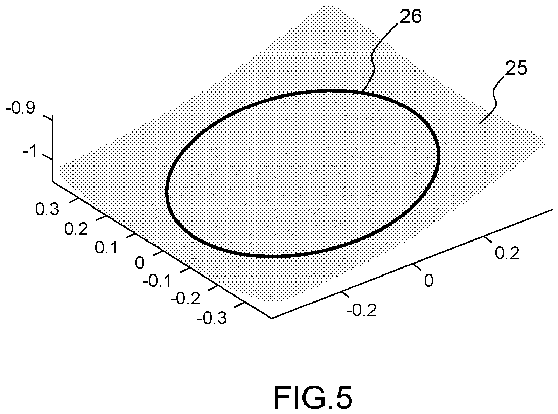

la figure 5 représente le maillage 3D d'une surface parabolique par des indices {i,j} ; si un zoom de cette figure 5 était réalisé, une pluralité de points indicés par le couple {i,j} apparaîtraient.

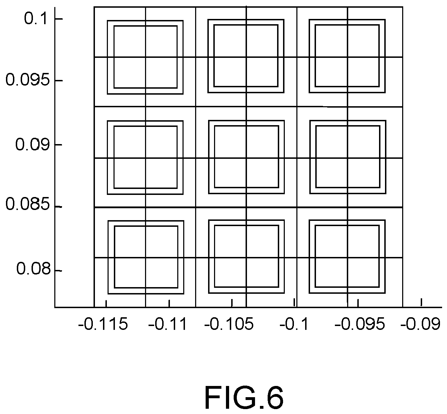

La figure 6 représente la répétition périodique, ici sous forme de matrice, de premiers motifs à projeter sur le maillage 3D de la figure, chaque centre de premier motif sera projeté en un couple {i,j} de la figure 5 (dans d'autres modes de réalisation, ce n'est pas le centre des motifs qui est utilisé, mais un autre point repère prédéterminé par rapport au motif).

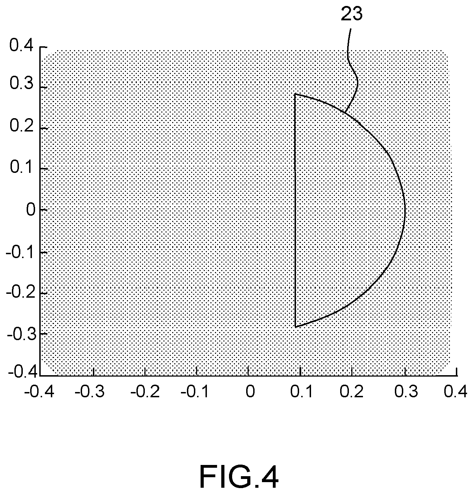

La figure 4 est une représentation du résultat 23 de la projection obtenu à l'étape 102 pour la portion 22 de surface non développable et comprenant un réseau de deuxièmes motifs.

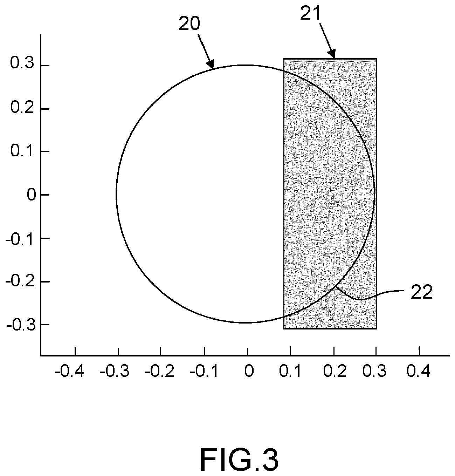

A titre d'illustration, en figure 3 sont représentées en vue de dessus d'une part la surface S (ici une surface parabolique) et une des portions de coupe 22 considérée (réalisée à partir notamment d'un feuillard cuivré plan 21 qui sera découpé, puis qui sera soumis aux étapes 103 à 105. En figure 4 est représentée la disposition 23 des deuxièmes motifs résultant de la sous-étape 102_5 de la projection obtenue en considérant la portion 22.

Le processus de fabrication dans les règles de l'art d'un composite s'effectue en une unique étape de polymérisation. Or, le besoin technique dans le cas considéré implique la gravure de motifs métalliques périodiques ou pseudo périodiques sur une ou plusieurs couches de composite thermodurcissable pour être intégré sur une forme finale 3D non développable. Or, cette gravure doit se réaliser sur des surfaces planes de composite.

Par conséquent, en accord avec les épaisseurs de composite nécessaire pour les fonctionnalités électromagnétiques, un nouveau procédé de thermoformage qui se découpe en deux étapes de polymérisation est utilisé :

Dans une étape 103, une étape de polymérisation partielle est mise en œuvre. Des tissus de fibres dans lesquels il y a une résine à l'état sec sont empilés les uns sur les autres. Un feuillard de matériau métallique, par exemple du cuivre, un composé de cuivre ou de nickel chrome, est déposé sur l'empilement composite thermodurcissable, qui, à ce stade est non totalement polymérisé, donc déformable. Par exemple, un double feuillard métallique (sur le recto et sur le verso de l'empilement) est utilisé. Puis l'ensemble, plan, est mis dans une étuve sous vide, on fait monter en température et en pression, un certain temps. Une première polymérisation incomplète permettant la tenue du composite thermodurcissable : il doit après cette polymérisation partielle être suffisamment rigide pour être gravé et avoir une tenue mécanique suffisante pour réaliser la gravure de la ou des couches de motifs métalliques sur le ou les plis partiellement polymérisés, mais pourra encore être déformé derrière (i.e. comme expliqué plus loin, il pourra être disposé dans le moule de façon à épouser la forme 3D du moule). Les conditions de pression, température durée prescrites par le constructeur pour la polymérisation sont ainsi adaptées expérimentalement en fonction des matériaux utilisés : chauffant moins fort et/ou moins longtemps et/ou à une pression moindre que ce qui est prescrit pour obtenir une polymérisation complète.

Dans une étape 104, une étape de gravure électrochimique est mise en œuvre.Dans un mode de réalisation, il correspond à la pièce 21 de la figure 3. Un masque, défini en fonction des deuxièmes motifs et de leur disposition respective définie par l'étape 102, est disposé sur les endroits où on veut conserver le cuivre du feuillard, pour créer cette disposition de deuxièmes motifs métalliques.

Ainsi, il est possible de graver, dans cette étape 104, les motifs métalliques directement sur une ou plusieurs faces du ou des composites (le motif unitaire pour les faces peut être le même ou non).

Dans un mode de réalisation, la gravure chimique est précédée d'une phase d'insolation où un film photosensible est appliqué sur la face métallisée, ladite face métallisée étant insolée par des rayonnements UV au travers d'un masque dont les parties évidées représentent lesdits motifs, les parties insolées n'étant pas gravées chimiquement.

Le document US 6 208 316 B1 divulgue un procédé où les motifs métalliques sont fabriqués par gravure chimique sur un support PTFE appelé Duroid.

Dans une étape 105, une deuxième étape de polymérisation, finale cette fois, est mise en œuvre.

Cette étape, consiste en la mise en forme finale de la pièce avec polymérisation complète, créant ainsi la surface S de forme 3D non développable. Elle consiste à mettre en forme les plis issus de la première étape de polymérisation. Pour ce faire, dans un mode de réalisation, des plis non polymérisés sont placés sous et sur les plis gravés dans un moule dédié. La surface du moule a la forme miroir de la surface non développable souhaitée, S. Puis un traitement standard de thermoformage scelle la structure dans sa forme finale 3D non développable telle que visée, avec tous les plis parfaitement polymérisés et les motifs dans la forme voulue. Suivant les modes de réalisation, pour obtenir une complète polymérisation, les conditions prescrites en pression, température et cuisson de polymérisation sont respectées ou alors elles sont adaptées.

On rappelle qu'une polymérisation est une réaction dans laquelle des unités de monomères se soudent les unes aux autres (par des liaisons chimiques) pour donner une molécule de haut poids moléculaire appelée polymère.

Dans un mode de réalisation, pour une paire de couche de motifs, Il est possible de les encapsuler deux à deux. Pour assembler 2 paires ou un nombre impair de couches de motifs, il faut réaliser un perçage, qui servira de repère (pion de centrage), permettant l'alignement parfait des motifs filtrants.

Dans le cas où plusieurs (n>1) sous-ensembles de couches comportant chacun une couche de motifs métalliques en surface (ou une sur chaque face supérieure, inférieure du sous-ensemble) doivent faire partie du matériau composite final, la définition des deuxièmes motifs à graver est obtenue pour chaque couche métallique de chaque sous-ensemble, à l'aide des étapes 101, 102, puis les étapes de polymérisation partielle et gravure sont itérées pour chaque sous-ensemble. Et seulement quand tous les sous-ensembles gravés de couches ont été superposés (ou apposés) et placés ensemble dans le moule, la polymérisation complète (étape 105) est mise en œuvre.

Pour conserver un très bon alignement des motifs superposés, au moins un pion de centrage est utilisé pour deux couches métalliques superposées.

Dans des modes de réalisation, l'empilement final comporte en outre une ou plusieurs couches de polymères, denses ou non denses.

Dans le mode de réalisation décrit plus haut, la découpe en N portions était réalisée lors de l'étape 102_2. Dans un autre mode de réalisation, l'étape 102_2 n'est pas réalisée et les étapes jusqu'à 102_4 sont réalisées par rapport à l'ensemble de la surface S, le découpage en N portions ayant lieu entre la fin de l'étape 102_4 et le début de l'étape 102_5.

La présente invention permet ainsi la fabrication de formes non développables avec motifs filtrants dédiés et comportant une ou plusieurs couches en matériaux filtrants et une ou plusieurs couches en matériaux non filtrants grâce à la mise à plat d'un design 3D et d'un thermoformage en plusieurs étapes.

La présente invention permet la réalisation de motifs filtrants par exemple pour les ondes millimétriques, de1 GHz à 300 GHz ou encore inférieures à 1 GHz ou encore supérieures à 300 GHz.

La présente invention permet de réaliser de façon précise des motifs de toute taille, y compris des motifs très petits, par exemple avec la technologie de gravure chimique utilisée par la réalisation de circuits imprimés, il est possible d'avoir une finesse de motif jusqu'à 20 µm et un espacement du même ordre de grandeur et une épaisseur minimale de l'ordre de quelques microns (typiquement 9 µm).

La présente invention permet ainsi de fabriquer des antennes ou réseau d'antennes, par exemple paraboliques bi-bandes, des radômes filtrants, des convertisseurs de polarisation (polarisation linéaire à circulaire), de correcteurs de polarisation, des réseaux réflecteurs.

Le terme thermodurcissable, comme il est connu, s'applique à un matériau polymère qui devient infusible et insoluble après polymérisation II se dit d'un polymère dont les macromolécules s'unissent, sous l'action de la chaleur, par liaison chimique tridimensionnelle. Les thermodurcissables sont des matières plastiques dont la plasticité commence par croître avec la température, puis diminue et est pratiquement nulle après refroidissement. Autrement dit, un objet en matière plastique thermodurcissable conserve sa forme (sauf à très haute température et/ou pression extrême). À l'opposé des matières plastiques thermodurcissables, les matières plastiques thermoplastiques sont des polymères qui, sous l'action de la température fondent ou se ramollissent suffisamment pour être mis en forme.

## Revendications

1. Procédé de fabrication d'un matériau composite de forme 3D (26), comportant un empilement de couches de résine et de fibre et au moins une couche de motifs métalliques, ledit procédé comprenant les étapes suivantes, une organisation périodique ou pseudo-périodique en 2D de premiers motifs similaires à un motif unitaire type (10) ayant été déterminée pour ladite couche de motifs métalliques en fonction de la fonction radioélectrique souhaitée pour la couche de motifs métalliques :
i/ calcul des premiers motifs de ladite organisation périodique une fois apposée sur la forme 3D ; puis projection, sur un plan, desdits motifs calculés sur la forme 3D, définissant ainsi une organisation plane de deuxièmes motifs ;
ii/ étape de polymérisation partielle, à plat, d'au moins un sous-ensemble de premières couches dudit empilement, de manière à le rendre gravable, mais à le garder déformable, lesdites premières couches étant à plat et comportant au moins une couche métallique en surface dudit sous-ensemble ;
iii/ gravure électrochimique de ladite organisation de deuxièmes motifs définie à l'étape i sur la couche métallique de l'empilement composite plat issu de l'étape ii ;
iv/ étape de polymérisation finale de l'empilement composite gravé après disposition dudit empilement dans un moule présentant la forme 3D souhaitée.

2. Procédé de fabrication d'un empilage composite de forme 3D selon la revendication 1, selon lequel la forme est une forme non développable.

3. Procédé de fabrication d'un empilage composite de forme 3D selon la revendication 1 ou 2, selon lequel, à l'issue de l'étape i :
- la valeur d'au moins un paramètre indiquant les déformations entre les motifs projetés sur ladite forme 3D et le motif unitaire cible est calculée ; et
- ladite valeur calculée est comparée à un seuil ; et
- si ladite valeur est supérieure au seuil, une modification est apportée à ladite organisation périodique ou pseudo-périodique en 2D de premiers motifs et/ou à un ou plusieurs premiers motifs ; et
avant la mise en œuvre de l'étape ii, l'étape i est itérée sur la base de ladite organisation périodique ou pseudo-périodique en 2D de premiers motifs obtenue après modification, les étapes ii à iv étant alors mises en œuvre sur la base de l'organisation plane de deuxièmes motifs obtenue après modification.

4. Procédé de fabrication d'un empilage composite de forme 3D selon la revendication 3, selon lequel un ou plusieurs paramètres sont calculés parmi un paramètre indiquant une déformation en longueur des motifs et un paramètre indiquant une déformation en angle des motifs.

5. Procédé de fabrication d'un empilage composite de forme 3D selon la revendication 3 ou 4, selon lequel une cartographie de la déformation est calculée, représentant en fonction de la position, sur ladite forme 3D, du motif projeté, un niveau de déformation.

6. Procédé de fabrication d'un empilage composite de forme 3D selon l'une quelconque des revendications précédentes, selon lequel le sous-ensemble de premières couches considéré à l'étape i comporte une couche métallique sur la face inférieure dudit sous-ensemble et une couche métallique sur la face supérieure dudit sous-ensemble et une gravure de motifs est effectuée sur chacune des deux couches métalliques à l'étape iii.

7. Procédé de fabrication d'un empilage composite de forme 3D selon l'une quelconque des revendications précédentes, selon lequel l'empilement devant comprendre plusieurs sous-ensembles comportant chacun un empilement de couche(s) de résine et fibre et de couche(s) métallique(s) périodique(s) ou pseudo-périodique(s) :
l'ensemble des étapes i, ii, iii est mis en œuvre pour chaque sous-ensemble, chaque sous-ensemble étant associé à sa propre organisation de motifs périodiques ou pseudo-périodiques; et
l'étape iv de polymérisation finale dans le moule est alors mise en œuvre une fois que les sous-ensembles chacun issus des étapes i, ii et iii ont été empilés ou apposés ensemble dans le moule.

8. Procédé selon l'une quelconque des revendications précédentes, **caractérisé en ce que** lesdits motifs métalliques ont pour fonction au moins une fonction parmi celle de filtrer des ondes électromagnétiques, d'être un ensemble ou sous ensemble de l'élément rayonnant d'une antenne et/ou de modifier la polarisation de l'onde EM.

9. Procédé selon l'une quelconque des revendications précédentes, **caractérisé en ce que** lesdits motifs métalliques ont pour fonction de recevoir ou d'émettre des ondes radioélectriques.

10. Procédé de fabrication d'un élément, comportant un procédé de fabrication d'un empilage composite selon l'une des revendications précédentes, selon lequel l'élément est un élément parmi une antenne, un radôme et/ou une surface polarisante.
